# EUROPEAN PATENT APPLICATION

(11) **EP 2 675 007 A1**
(43) Date of publication of application: **18.12.2013**
(21) Application number: 12171566.8
(22) Date of filing: 11.06.2012
(51) Int. Cl.: H01M 8/02

(54) **A gas flow dividing element**

(71) Applicant: HTceramix S.A., 1400 Yverdon-les-Bains (CH)
(72) Inventor: Wuillemin, Zacharie, 1098 Epesses (CH)
(74) Representative: Dr. Graf & Partner AG

(57) **Abstract**

A gas flow dividing element for a fuel cell or an electrolyzing device comprises a supporting layer (4), which is disposed with a pattern for a fluid flow and a cathode-anode-electrolyte unit (5). The cathode-anode-electrolyte unit (5) is composed of a first electrode (51), a second electrode (53) and an electrolyte (52) sandwiched between the first electrode (51) and the second electrode (53). The supporting layer (4) is arranged in a contacting relationship with the first electrode (51), whereby a reactant fluid passage (30) is formed by the pattern for fluid flow for contacting the reactant fluid with the first electrode (51). The supporting layer (4) comprises a separating element (1, 32, 34, 38) to form a gas distribution structure (33, 35, 36, 37) for dividing the reactant fluid into a first portion of reactant fluid contacting the first electrode (51) and a second portion of reactant fluid not contacting the first electrode (51).

## Description

### Technical field

The invention concerns a gas flow dividing element for a fuel cell or an electrolyzing device, in particular an air flow dividing element for distributing a reactant onto the electrode of the fuel cell or an electrolyzing device and a method for operating such a gas flow dividing element.

### Background of the invention

Fuel cells are electrochemical devices for converting chemical energy stored in fuels directly into electrical energy by performing an electrochemical reaction. In most cases oxygen or oxygen ions react with hydrogen, CO or other fuels, thereby generating a flow of electrons and consequently providing an electric current as well as heat.

The reaction employs a reducing agent and an oxidant as reactants, which are to be continuously fed to the fuel cell, typically the hydrogen is used as a reducing agent and oxygen or air containing such oxygen is used as an oxidant.

In most cases, a fuel cell can be used reversely to perform an electrolysis reaction, where an electrical current and possibly also heat have to be provided. For the sake of simplicity, only the fuel cell operation mode is described below.

A fuel cell power system in general comprises the following components: one or several fuel cell stacks, as well as auxiliary equipment also referred to as balance of plant. The fuel cell stack is made of individual repeating-units which are modularly combined and electrically connected. The individual repeating-units contain one or several cell membranes, in which the electrochemical reactions as mentioned above take place. The repeating-units contain also components to feed the reactants, allowing electrical contacting or sealing, etc.

The auxiliary equipment provides the conditioning of the feed streams, thus providing air or oxygen and the fuel at the correct temperature and pressure conditions as well as an optional fuel processor or fuel reformer. Furthermore the auxiliary equipment may include heat exchangers for the correct operating temperature of the fuel cell stack and for making use of the thermal energy generated by the electrochemical reactions to preheat fuel or oxidant feed streams, and to deliver useful heat to the user. An example for such a heat exchanger is disclosed in W02006/048429 A1.

The auxiliary equipment may also include electrical energy management systems.

A cell membrane usually consists of an electrolyte in contact with an anode and a cathode on either side thereof. The electrolyte is an ionic conductor, but electric insulator. In operation as fuel cell, a fuel is fed continuously to the anode, thus the negative electrode and an oxidant is fed continuously to the cathode, thus the positive electrode. The electrochemical reactions take place at the electrodes to produce an ionic current through the electrolyte as soon as an electric current is allowed to flow from/to the respective electrodes through an external circuit, hence allowing performing a work on a load.

The unit cells comprising the cell membranes as mentioned above can have different shapes, such as plates or tubular structures. Each cell membrane has to be contacted electrically. In addition, the reactant gases have to be properly distributed over the surface of the electrodes to maximize the efficiency of the reaction. This is achieved for instance by creating gas distribution layers of specific geometry in contact with the surface of the electrodes. Both the electrical conduction and gas distribution are therefore often combined in specific parts. Together with the cell membranes and additional individual components, this sub-assembly represents one repeating-unit of the fuel cell stack.

For planar cell membranes, the individual repeating-units are most often placed on top of each other to form a stack.

In this case, in the repeating-units the gas distribution layers are used not only to transport the reactants to the electrodes, but also to conduct the electrical current from one electrode of a first cell membrane to the second electrode of another cell membrane, thereby connecting several cells in series.

In a unit cell, the dense electrolyte provides a physical barrier to prevent the fuel and oxidant gas streams from mixing directly. In planar stacks, bipolar plates usually ensure the same separation of gases between adjacent repeating-units, providing also the electrical contacting through the gas distribution layers.

A large number of catalyst sites are to be provided at the interfaces between the electrolyte layer and the electrodes, thus a zone which has mixed conductivity for electrons and ions. The performance of the fuel cell membranes has been continuously improved by efforts to increase the conductivity of the electrolyte, developing improved electrode catalytic activities and reactant transport, and broadening the temperature range over which the cells can be operated.

The electrodes are typically porous and are made of an electrically and possibly also ionically conductive material. At low temperatures, only a few relatively rare and expensive materials provide sufficient electro-catalytic activity, thus in these cases catalysts are deposited in small quantities at the interface between the porous electrode and the electrolyte. In high temperature fuel cells, a larger number of materials qualify for an electrode material thanks to their improved electro-catalytic activity.

The porous electrodes thus have the primary function of providing a surface for the electrochemical reactions to take place. In addition, their function is to conduct electrons away from or into the three-phase interface and provide current collection and connection with either other cells or the load.

While the performance of the cell membranes is principally dictated by the choice of materials, their size or microstructure and the way they are combined together, the performance of a fuel cell stack depends to a very important extent also on the quality of the distribution of reactants over the cell membranes, the electrical contacting of the electrodes, and the homogeneity of reactant flows and of temperatures among the different repeating-units. Last but not least, the choice of the fuel processing and of the operating points has an important impact on the performance and the lifetime of the fuel cell.

A variety of fuel cells has been developed and is currently under various stages of commercialization. The most common classification of fuel cells relates to the type of electrolyte used, such as solid oxide fuel cells (SOFC), polymer electrolyte fuel cells (PEFC), alkaline fuel cells (AFC), phosphoric acid fuel cells (PAFC) or molten carbonate fuel cells (MCFC).

A polymer electrolyte fuel cell (PEFC) has an electrode which is configured as an ion exchange membrane, in particular a fluorinated sulfonic acid polymer, which has the characteristic of being a good proton conductor. The only liquid present in the fuel cell is water, as the fuel is mostly a hydrocarbon fuel providing the hydrogen ions and the oxidant is air providing the oxygen for performing the electrochemical reaction. The operation temperature is usually less than 100°C as the membrane must be hydrated by water and such water should therefore not evaporate faster than it is formed. Thus preferably the operating temperature is around 60°C to 80°C. Typically carbon electrodes with a platinum electro-catalyst are used both for the anode and the cathode. The bipolar or separator plates are either made of carbon or metal. The fuel should not contain any CO as the anode is easily poisoned by traces of CO. An important commercial application for PEFC is fuel cell vehicles, as well as electrolyzers.

An alkaline fuel cell (AFC) has a KOH electrolyte, which is retained in a matrix, e.g. made of asbestos and a wide range of electro-catalysts can be used, e.g. Ni, Ag, metal oxides, spinels, noble metals. It is OH-ions that are the charge carriers across the electrolyte.

The operation temperature is usually about 250°C if a KOH of a concentration of about 85 weight % is used and may be lower than 120°C if a KOH of a concentration of 35% to 50% is used. The fuel may not contain any CO nor any CO₂ which would react with the electrolyte to K₂CO₃, thereby altering it. Thus preferably pure hydrogen is used as a fuel for an AFC. Typically electrodes composed of transition metals are used with a platinum electro-catalyst are used both for the anode and the cathode; the bipolar plates are made of metal.

A phosphoric acid fuel cell (PAFC) uses highly concentrated phosphoric acid as the electrolyte which is retained in a matrix, e.g. made of silicon carbide and mostly platinum is used as an electro-catalysts. The ions transported in the electrolyte are protons. The typical operating temperature of a PAFC lies between 150°C and 220°C due to the fact that the concentrated phosphoric acid has a high stability even under these comparatively high temperatures. At lower temperatures, phosphoric acid is a poor ionic conductor and CO poisoning of the platinum electro-catalyst occurs. At the higher operating temperatures a content of up to 1 % of CO as diluent is acceptable. Typically electrodes composed of carbon are used both for the anode and the cathode; the bipolar plates are made of graphite. Due to the corrosive nature of phosphoric acid, expensive materials such as graphite have to be used. The main field of use of PAFC is stationary applications.

A molten carbonate fuel cell (MCFC) uses a combination of alkali carbonates as the electrolyte, which is retained in a matrix of LiAlO₂. The typical operating temperature of a MCFC is about 600°C and 700°C where the alkali carbonates form a highly conductive molten salt, with carbonate ions providing ionic conduction. The anode usually consists of nickel and the cathode of nickel oxide, the interconnects are made of stainless steel or nickel. The nickel/nickel oxide electrodes provide sufficient activity at the high operating temperature, thus an electro-catalyst is not needed. The fuel can comprise CO and hydrocarbons, furthermore a source of CO₂ is required at the cathode, which can be provided by the exhaust from the anode. The main field of use of MCFC is stationary applications.

A solid oxide fuel cell (SOFC) uses a solid electrolyte which is a nonporous metal oxide, such as 3%-10% yttria-stabilized zirconia (YSZ) that is ZrO₂ stabilized by Y₂O₃, or Sm₂O₃-doped CeO₂ (SDC) or GdO₂-doped CeO₂ (GDC). The typical operating temperature of a SOFC depends on the electrolyte material and is about 500°C up to 1100°C with oxygen ions providing ionic conduction. The anode and the cathode usually include also ceramic materials. The fuel electrode is usually made of a combination of metal and a ceramic forming a cermet, e.g. mostly Ni-YSZ cermets. The oxygen electrode usually comprises an electrically conductive doped perovskite or a combination of a perovskite and an ionic conductive ceramic such as YSZ or GDC. Typical perovskites used as cathode contain a combination of La, Sr, Co, Fe, Mn.

The bipolar plates are usually made of stainless steel.

Further information on possible components for cathode, anode and electrolyte as well as optional intermediate layers and catalysts can be found in US 7 632 586 B2 incorporated by reference.

The fuel can comprise next to hydrogen CO and other hydrocarbons, such as methane or ammonia, whereas only H₂ and CO are easily converted electrochemically. The other fuels are consumed indirectly or require a dissociation step before being converted. Furthermore, a SOFC can tolerate a fuel that is diluted by inert gases such as N₂, CO₂ or steam. Amongst the hydrocarbons, it can be natural gas, gasoline, diesel or also biogas. This type of fuel cell remains however sensitive to some poisoning elements contained in the fuels, such as sulphur, in particular H₂S and COS that are considered as a poison already in a concentration of above 1 ppm.

The cathode-anode-electrolyte unit of the cell membrane is constructed with two porous electrodes that sandwich the electrolyte. Air flows along the cathode, thus transporting oxygen molecules to the cathode. When an oxygen molecule contacts the cathode/electrolyte interface it acquires electrons from the cathode. The oxygen ions diffuse into the electrolyte material and migrate to the other side of the cell where they contact the anode. The oxygen ions encounter the fuel at the anode/electrolyte interface and react catalytically, whereby water, carbon dioxide, heat and electrons are produced. The electrons are fed into the external circuit for providing electrical energy.

The main field of use of SOFC is stationary applications, such as stationary power generation, mobile power, auxiliary power for vehicles, specialty applications. The power densities usually attained by SOFCs are in the range of 200 to 500 mW/cm² for stationary applications.

The SOFC is the fuel cell having undergone the longest continuous development period, starting in the late 1950's. Due to the fact that a solid electrolyte is foreseen, the cell membrane can be formed into a variety of shapes, such as tubular, planar or monolithic shapes. The electrical efficiencies depend largely on the used fuel. Using hydrogen as fuel, electrical efficiencies in the range of 45%-55% (LHV) can be achieved, with maxima close to 60% at the level of a repeating-unit. Using methane as fuel, system electrical efficiencies of 60% can be attained for stack electrical efficiencies close to 70%. Furthermore the emissions of acid gas or any solids are negligible.

An arrangement of a solid oxide fuel cell system for generating electric power by combination of oxygen with a reactive gas, i.e. a fuel gas is disclosed in WO2006/048429. The solid oxide fuel cell includes a stack configuration comprising an electrolyte layer sandwiched between two electrodes. One of the electrodes is in operation in contact with oxygen or air, the other electrode is in contact with a fuel gas at an operating temperature of about 500°C to about 1100 °C. Usually a support layer is used during the production of the cell to contain the electrode layer and to provide additional mechanical stability of the cells. The support layer may also function as a current collector.

The cathode comprises a perovskite, a lanthanum or strontium manganite or an yttria stabilized zirconia. Oxygen ions are formed from the oxygen gas provided at the cathode, which migrate through the electrolyte layer to combine with the hydrogen gas provided at the anode. The anode comprises nickel and/or yttria stabilized zirconia. At the anode, water is formed and electrons are provided, which are collected in the current collector.

One characteristic of fuel cell systems is that their efficiency is nearly unaffected by size. This means, that small, relatively high efficient power plants can be developed starting from a few kW for domestic cogeneration units to low MW capacity power plants.

A problem associated with fuel cells in general is the fact that a single cell membrane does generate a DC potential in the order of 1V, which is too small to be used for residential or automotive applications. For this reason, a plurality of cell membranes is combined to a stack of cell membranes connected electrically in series as to provide a voltage of sufficient magnitude to be converted efficiently to AC current and employed in most commercial applications.

Usual stacks are made of a few tens to a few hundreds of cell membranes connected partly in series and in parallel, with some designs including even a few thousands of cells.

The assembly of a stack of repeat-units should therefore at one hand require as few assembly steps as possible and on the other hand guarantee proper operating conditions for each of the cell membranes.

Due to the connection of repeat-units in series, any performance limitation on one single cell membrane may have important consequences on the overall performance of the stack, as it can limit the overall current that can be driven and therefore the resulting electrical power.

The stack construction depends on the type of cell membranes that are used. The first main class of stacks use tubular cell membranes such as presented in WO01/91218 A2.

The second class of stacks uses planar cell membranes that can be interconnected by piling up. Among them, principal differences concern the type and geometry of fuel and oxidant supply, or the design of gas distribution over the electrodes and their electrical contacting.

A first concept which has been proposed e.g. in EP 1 864 347 B1 is a stack of cylindrical shape. Thus the cell membrane is a disk-shaped ceramic three layer membrane consisting of a positive electrode, an electrolyte and a negative electrode (CAE unit). The fuel is supplied in a central channel and directed radially outwardly and an oxygen containing gas is supplied from the periphery and directed toward the central channel.

In US2011/0269048A1, a stack concept based on rectangular cell membranes is shown, where said membranes are attached to a gas distribution unit presenting fuel inlet and outlet ports, and where the oxidant is supplied and extracted at the periphery of said gas distribution unit. In order to improve gas distribution of the gas flowing across the surface of the cell membrane the gas channels are curved. Previously, the tubular manifolds at the gas entry and exit section of the cell membrane have presented an obstacle to gas flow which has resulted in an inhomogeneous flow field of the gas flowing across the cell membrane. According to US2011/0269048A1 curved gas channels are suggested, which guide the gas around the obstacles to the regions behind the obstacles. Thereby a more even distribution of gas flow can be obtained and the negative impact of the obstacles on gas flow be compensated.

The reactant supply and discharge of the solution presented in EP 1 864 347 B1 require according to US 7 632 586 B2 a relative complicated manufacturing procedure for the interconnecting plates. To avoid this, the planar CAE units are positioned one above the other with interconnecting layers formed as planar metal plates arranged in between neighboring CAE units. The respective passages for fuel and oxidant are formed in the anode and cathode layers.

Furthermore the effects of expansion of the CAE unit and the structures for supplying the CAE unit with the reactants and conducting the reactants away therefrom have to be taken into account.

Moreover, the electrodes and interfaces tend to degrade as soon as excessive temperatures are reached.

Due to the exothermic reaction, an active cooling of the unit cells is therefore required, which can be principally achieved by air cooling. To limit temperature gradients and excessive temperature differences in the CAE unit and in the gas distribution structures, a proper distribution of the cooling air in the unit cell is required. To limit temperature differences, a large excess of cooling air is required with respect to the amount that would be necessary for the electrochemical reaction itself. This excess air implies additional losses in the balance of plant, in particular due to the consumption of the air blowers. These losses can however be reduced if the pressure drop in the stack is low, that means, if the gas distribution structure for the air in the stack presents a low resistance to the air flow.

An additional drawback of the use of excess air is the transport of poisoning species onto the air electrode. Especially volatile chromium is known to be released by the metallic components situated upstream of the stack and transported into the stack by the air stream. The volatile chromium tends to deposit in the air electrodes by electrochemical and chemical reactions. In particular, volatile chromium reacts spontaneously with the strontium contained in the electrodes. Moreover, it can be deposited electrochemically as chromium oxide at the electrode/electrode interface, hence reducing the number of reacting sites. Not only chromium, but also silicon, sulfur and other species are known to further affect the durability of the air electrode.

A problem associated with fuel cell stacks of the prior art are local temperature peaks developing on the surface of an electrode, which usually forms a planar layer.

If such local temperature peaks occur, the reaction kinetics may be altered and a local hot spot may be formed. Such a hot spot is undesired because it involves a high strain on the materials, by causing a local thermal expansion, which may lead to warpage or deformations of the layer materials affected. Due to the fact that the ceramics materials of the electrodes or the electrolyte are brittle, they may be subject to cracks and eventually break if subjected to substantial local temperature variations.

The occurrence of such hotspot can be drastically reduced by increasing the cooling air flow, and by proper design of the air distribution structure that contacts the CAE unit and hence can serve as heat dissipating structure.

The effect of thermal strain can further be mitigated in principle by a stack having a similar configuration as shown in US 6 670 068 B1. Thus a plurality of CAE units are in electrically conductive contact with a contact plate and a fluid guiding element is formed as shaped sheet metal part and connected to the contact plate in a fluid-tight manner by welding or soldering. Thereby the contact plate defines a fluid chamber having a combustible gas or an oxidation agent flowing through it during operation of the fuel cell unit. The shaped sheet metal part is disposed with a plurality of corrugations giving it a wave-like structure. The wave-like structure as such may compensate for some of the thermal expansion of the CAE unit and of the fluid guiding element in operation. However due to the local contact of the wave peaks or wave troughs with the respective electrode, the fluid guiding element has to follow the thermal expansion of the electrode. If the fluid guiding element does not have sufficient elasticity the strain due to thermal expansion is introduced into the electrode. The electrodes are formed from solid, brittle ceramics. Thus, if a high strain is introduced into the electrodes, cracks may be formed, which will ultimately destroy the electrode. In addition the welding or soldering connection provided between the fluid guiding element and the anode also contributes to the stiffness of the construction. In particular if materials having a different coefficient of thermal expansions are used, the strains may finally lead to damages of the electrode and may damage the cell membrane concerned. In particular the flow of reactants may be altered or direct mixing of them can occur if the cell membrane is broken, leading to spontaneous combustion. Thus locally hot spots may form, which may induce local thermal expansion and thus further development of local stress.

An additional solution for mitigating the effects of thermal strain and thermal expansion is provided in WO2004/021488. This solution foresees a frame of a first and a second foil-like element enclosing a fuel passage. A CAE unit is attached to the first of the foil-like elements with the anode being arranged immediately adjacent to the first foil like element on the opposite side of the fuel passage. The fuel reaches the anode by traversing the first foil-like element, which is disposed with perforations for this purpose. The second foil like element is fluid-tight and serves as a separating element to separate fuel flow from the flow of the oxide containing gas, such as air. A good electrical contact is ensured by providing a wire mesh in the fuel passage and by providing a further wire mesh on the second foil like element on the side opposite of the fuel passage. The supporting structure of WO2004/021488 can thus expand quite freely, and the close bonding of the CAE unit to the foil-like elements plays a role of a heat dissipating structure.

A problem associated with fuel cell stacks is the pollution of the air electrode by species transported in the air. For solid oxide fuel cells and electrolyzers, these pollutants are known to originate mostly from seal components, in particular those found in the stack, and from other components such as heat exchangers, piping, valves, seal materials, etc. placed upstream of the fuel cell (Cr, Si, S, B, alkali metals etc.), which are transported into the fuel cell by the air stream. Moreover, some pollutants may originate directly from the ambient air (such as Si, S, alkali).

### Summary of the invention

Thus it is an object of the invention to avoid pollution of the oxygen-containing electrode by species transported with the oxygen containing reactant fluid, such as air.

The solution according to the invention is subject of claim 1. The dependent claims 2 to 12 concern further advantageous configurations or embodiments of the invention. The independent claim 13 refers to a fuel cell or an electrolyzing device comprising a gas flow dividing element according any one of the preceding claims and dependent claim 14 refers to an advantageous embodiment of claim 13. Claim 15 refers to a method of operation of a gas flow dividing element in accordance with claims 1 to 12.

The oxygen containing reactant fluid, in particular air, is used in a fuel cell on one hand for the electrochemical reaction, and on the other hand for cooling and heating purposes. Therefore, part of the reactant fluid doesn't necessarily have to flow over the oxygen receiving electrode.

A gas flow dividing element for a fuel cell or an electrolyzing device comprises a supporting layer, which is disposed with a pattern for a fluid flow and a cathode-anode-electrolyte unit. The cathode-anode-electrolyte unit is composed of a first electrode, a second electrode and an electrolyte sandwiched between the first electrode and the second electrode. The supporting layer is arranged in a contacting relationship with the first electrode, whereby a reactant fluid passage is formed by the pattern for fluid flow for contacting the reactant fluid with the first electrode. The supporting layer comprises a separating element to form a gas distribution structure for dividing the reactant fluid into a first portion of reactant fluid contacting the first electrode and a second portion of reactant fluid not contacting the first electrode. If the expression "or" is used in this application for combining two alternatives, both the combination of both alternatives as well as the presence of only one of the alternatives is to be understood. If it is not specifically referred to a fuel cell, the features may be applied to either fuel cells or electrolyzing devices.

If the gas flow dividing element is operated in a fuel cell, the first electrode is a cathode and the second electrode is an anode and the reactant fluid flow is directed to the cathode. In case the gas flow dividing element is operated as an electrolyzing device, the first electrode is an anode and the second electrode is a cathode. For fuel cells or electrolyzing devices a plurality of reactant fluids can be employed, at least a first reactant fluid and a second reactant fluid. The first reactant fluid is the fluid that can react with O₂ in an exothermic reaction in the fuel cell operation mode or can be dissociated in an endothermic reaction while forming O₂ in the electrolysis mode. It is typically any mixture of H₂, N₂, H₂O, CO, CO₂, ammonia, CH₄ and any other hydrocarbon gases. Depending on the operation as fuel cell or electrolyzing device and on the type of fuel cell, the gas mixture is varied. The second reactant fluid is O₂-containing gas, preferably air. In the case of an electrolysis device, it has to be noted that an external supply of this O₂-containing gas is not necessarily required.

According to an embodiment the separating element is a separating wall element such that the gas distribution structure is configured as a bypass fluid passage or a splitting element such that the gas distribution structure is configured as a split fluid passage. The separating element can be configured as one of a splitting element with attached gas distribution structures for distribution of a cooling fluid or a base layer with integrated or attached gas distribution structures for distribution of a cooling fluid. The separating element can be at least one of an at least piecewise continuous sheet element or a sheet element containing openings for partial mixing of flows.

According to an embodiment a sealing element is provided for sealing the pattern for fluid flow of the supporting layer from the environment. The gas distribution structure advantageously forms a dividing fluid passage arranged within the sealing element or adjacent to the sealing element or between the sealing element and the separating element for the second portion of reactant fluid. In particular, the sealing element is a lateral sealing element arranged at the periphery of the supporting layer.

According to an embodiment the base layer is provided on the side of the supporting layer, which is opposing the cathode-anode-electrolyte unit. The base layer can contain a gas distribution structure forming a cooling fluid passage.

According to an alternative embodiment the separating element is formed as a corrugated sheet. The corrugated sheet can have one of a wave shape, a zigzag profile or a trapezoidal profile. The corrugated sheet is advantageously made of a metallic material. In particular, the corrugated sheet provides a support for the sealing element. Thereby an additional bypass fluid passage may be provided. The separating element can in this case have a gas distribution structure, which has a first surface facing the cathode-anode-electrolyte unit so to form the reactant fluid passage and a second surface facing the base layer to form a split fluid passage.

A fuel cell or an electrolyzing device comprises gas flow dividing element according to any one of the previous embodiments and can further comprise a gas distribution element comprising a first layer and a second layer, said first and second layers are disposed with a gas distribution structure forming a pattern for a fluid flow, and the second layer is a homogenizing element, which has first apertures or second apertures wherein at least some of the first apertures have a length and a width, with the length being greater than the width and the length extending in a transverse direction to the main direction of fluid flow. Advantageously the base layer separates the gas distribution element from the supporting layer. Various advantageous embodiments of the gas distribution element will be subject to the subsequent description.

A fuel cell or an electrolyzing device comprises a gas flow dividing element according to any one of the preceding embodiments.

A method for operating a gas flow dividing element for a fuel cell or an electrolyzing device comprises the steps of providing means for a first reactant fluid to flow along a first side of a cathode-anode-electrolyte unit. A second reactant fluid flows along a second side of the cathode-anode-electrolyte unit. The first or second reactant fluids provide reactants, charge-carrying ions and electrons to a cathode-anode-electrolyte unit on either side thereof such that the charge-carrying ions can cross the electrolyte to perform an electrochemical reaction, whereby only one of the first or second reactant fluids flows through a supporting layer which is disposed with a pattern for a fluid flow. A reactant fluid passage is formed by the pattern for fluid flow such that the one of the first or second reactant fluids contacts the first electrode. The supporting layer comprises a separating element to form a dividing fluid passage whereby only one of the first or second reactant fluids is divided into a first portion of reactant fluid contacting the first electrode and a second portion of reactant fluid not contacting the first electrode.

Thus according to the first principle a bypass of polluted streams is foreseen. The presence of polluted air stream and specific sources of pollutants can be evaluated by simulation or experimentally. In particular, previous studies have shown that in particular fuel manifolds and seal materials placed along the gas flow are major sources of pollutants, generating not only volatile contaminants for the air electrode (Si, alkali, B, Ba, etc.), but also increased volatile Cr from adjacent metallic parts in case of residual steam generation. Provided the principal potential sources of pollutants are known bypass fluid passages are foreseen, which are in particular channels which duct the contaminated air and prevent the polluted reactant fluid stream from reaching and contaminating the air electrode.

The gas flow dividing element can in particular be used to avoid pollutants and residual steam originating from the seals of the fuel manifolds to be transported over the air electrode of the fuel cell. Air bypass channels are created therefore downstream of the seals. According to a particular preferred embodiment, the reactant fluid passages are fuel manifolds, which are preferably placed laterally of the air flow at least at the air inlet side of the stack. Bypass channels are placed downstream of them, alongside of the gas flow dividing element in the main direction of flow.

These channels can be formed by proper shaping of the supporting layer or the base layer, which can be in particular a bipolar plate, by additional dedicated shaped or hollow parts serving as bypass ducts, or preferably combined or unitary with the supporting layer.

As an alternative approach, a limitation of air electrode pollution can be obtained by reduction of the effective air flow in contact with the cathode by splitting of the air flow in reactive air and cooling or heating air. The effect of the second main pollutant source, thus incoming air, is reduced by splitting the air flow into one stream flowing over the air electrode for the electrochemical reaction and a second stream separated adequately from the electrode such as to allow proper cooling and heating of the fuel cell. Both streams are advantageously flowing in parallel direction and are fed from the same manifold.

The split of the air stream is done by using a separating layer made of one thin layer of, appropriate material which can in particular be electrically conductive that creates a partial or full separation of the cooling or heating air stream from the air, used for the electrochemical reaction. This separating layer can be fully continuous or piecewise continuous. It can be partially porous and even present some holes allowing partial mixing of the air from one side to another at specific locations.

For both streams, thus the first portion of reactant fluid contacting the first electrode and the second portion of reactant fluid not contacting the first electrode, a structured flow field is built such as to allow proper distribution of the gas as well as electrical conduction, thereby allowing to transfer electrical current between the air electrode and the base layer, e.g. the base layer. The two flow fields can be obtained by providing channel-like structures or any three dimensional structure such as pins or fins.

In general, when it is referred to a bypass, the flow of the gases occurs alongside the active area, while the split is done over the active area such as to enable cooling close to the heat source. In an operation as a fuel cell, the active area is the air electrode.

An air-distribution layer element for fuel cells thus can also comprise a combination of pollutant bypass channels, sealing surfaces, and a split of the air stream for cooling and reaction purposes in order to limit air electrode pollution. The pollutant bypass function is obtained by forming a channel or a series of it creating a controlled bypass flow away from the air electrode. As a preferred option, the bypass channel is made of shaped thin metal sheet. Moreover, if placed along the side of the element, it can be shaped such as to allow a lateral sealing of the assembly in combination with any sealing material, such as to prevent the air to escape the gas flow dividing element laterally.

According to a preferred embodiment, half of the created channels for providing air to the air electrode are used for the electrochemical reaction, and the second half of the channels in contact with the base layer are used only for cooling and heating purposes.

The gas distribution element for a fuel cell, in particular a solid oxide fuel cell (SOFC) or an electrolyzing device enables the appropriate distribution of the reactive gas on the fuel electrode of the fuel cell as well as proper electrical contact with the latter. The following passages thus concern the gas distribution element and its construction in a fuel cell or electrolyzing device stack. The fuel cell is usually configured as a fuel cell stack composed of a plurality of unit cells. Thus the unit cells are combined in a modular fashion into such a fuel cell stack as to achieve the voltage and power output level required for the application. The stacking thus involves connecting multiple unit cells in series via electrically conductive interconnects or bipolar plates.

According to the invention, the interconnects or separator plates are part of the gas distribution element. Thus, the gas distribution element for a fuel cell, in particular a solid oxide fuel cell, or an electrolyzing device comprises a first layer and a second layer, said first and second layers being disposed with a gas distribution structure forming a pattern for a fluid flow for a first reactant fluid and eventually a second reactant fluid.

The second layer is a homogenizing element, which has first apertures or second apertures wherein at least some of the first apertures have a length and a width, with the length being greater than the width and the length extending in a transverse direction to the main direction of fluid flow. Thus the gas distribution structure comprises in particular a plurality of channels wherein the second layer contains apertures, which have a length extending transversely to the main direction of flow. The gas distribution structure thus advantageously comprises apertures, which can form a pattern of channel structures or a channel system.

For a solid oxide fuel cell or an electrolyzing device it is essential that the reactive gas is homogeneously distributed over the fuel electrode in order to maximize its efficiency and guarantee a reliable operation. In practice, this requires that the gas distribution layer's channel or porous structure presents a homogeneous resistance to gas flow, thus an even pressure drop. For the channel system, this requires usually a very precise geometry, involving very tight fabrication tolerances and incurring therefore high costs.

In particular, the second apertures have a length and a width, with the length being greater than the width and the width extending in a transverse direction to the main direction of fluid. These first or second apertures can form channel-like structures, which are arranged in particular rectangular or inclined to the channels arranged in the first layer. This has the advantage, that the fluid flowing inside the aperture of the first layer may be directed by a gas distribution structure arranged on the first layer towards the aperture of the second layer. The apertures of the first and second layers provide a pathway for the fluid and thus a fluid passage is formed over or across the gas distribution structure. Whenever the respective reactant fluid flows over or across the gas distribution structure of the first layer it enters the aperture of the second layer above the gas distribution structure of the first layer, i.e. it enters the aperture of the second layer above the gas distribution structure of the first layer and is distributed into a channel in the first layer continuing behind such a gas distribution structure and the neighboring apertures of the first layer due to the fact that first apertures are foreseen which have a length and a width and their length being larger than their width and their length extending in a transverse direction to the main direction of fluid flow.

The first or second apertures in the second layer can be in particular formed as holes, which have rectangular, square or round cross-sections. The gas distribution forms a pattern for the fluid flow of the first layer which can comprise at least one of channels, interrupted channels, three-dimensional structures, in particular protrusions, such as pins, grid structures or foam structures. These gas distribution structures can be manufactured from solid or porous metal or conducting ceramics. Advantageously a channel structure consisting of a single sheet or a pair of sheets is foreseen, which forms a unit cell together with the second layer or homogenizing layer.

An electrical contact between the different layers of the unit cell is obtainable by mechanical contact, welding, brazing or thin contact layers.

Each of the first or second layers can serve either as a cathode or an anode. Their function may be reversed depending on the nature of the electrolyte or the operation of the gas distribution element for a fuel cell or an electrolyzing device. A first reactant is rich in oxygen, for instance air. A second reactant contains at least one of the elements H₂ CO, CO₂, H₂O, ammonia or carbon containing gases.

A third layer may be provided, which is in particular used as a gas distribution layer for the oxygen electrode.

The gas distribution layer has the following advantages: The homogenizing element allows to correct geometrical defects present in the gas distribution structure of the first layer. Therefore, low-cost production processes are applicable for the first and second layers, while maintaining a high quality of the gas distribution. In addition, stacks can be produced in different configurations with various footprints. The fuel cell system or the electrolyzing device can be adapted to a variety of uses depending on need. Under footprint, the overall length and width dimensions of the basement of the fuel cell stack is understood.

In an embodiment, 65% electrical efficiency based on the lower heating value of fuel was obtained on a stack module in a test at the Swiss Federal Institute of Technology (EPFL). The stack was fueled with steam reformed methane (steam-to-carbon ratio of 2) and was operated at 750°C with a power density of 250 mW/cm^{2.}

With such efficiencies, the distributed generation of electricity in kW-sized units using SOFC technology is more efficient than centralized generation in MW-size plants using the best available combined cycle gas turbine (CCGT).

The ceramic gas diffusion layer which is placed on either side of the solid oxide fuel cell which, in turn, is sandwiched between two metallic interconnects reduces the cost of the overall stack by making it less complex and less expensive to manufacture as far as materials are concerned.

Thus the units are used as an alternative source of electrical energy for supplying electricity to houses which involves at least a 0.5 kW stack and preferably a 2.5 kW stack.

According to an embodiment, on the gas distribution structure of the first layer is at least partially obstructed by at least a bar element.. The bar element is to be considered as an obstacle to the fluid flow through the gas distribution structure of the first layer. The gas distribution structure can be any type of barrier or throttle element, which forces the fluid flow to deviate from proceeding in the main direction of fluid flow, or that creates a local restriction of the hydraulic diameter of the flow channels.

At least some of the first or second apertures of the second layer can be shaped as perforations, in particular as holes. The first and second layers thus form a gas distribution element, which is composed of at least one sheet metal. The at least one sheet metal layer forms a channel structure facing the perforated layer. The particularity of the perforated layer is to present a series of elongated holes extending substantially perpendicular to the fuel distribution channels and allowing mixing the gas of several channels in the near environment at regular intervals along the flow direction.

Advantageously the length of the perforations is greater than the width of the bar element. Either the first or second reactant fluid can thus pass over the obstacle formed by the bar element and therefore the flow deviates thus from the main direction of flow allowing for a mixing of the stream through one channel with streams passing through adjacent channels. According to an embodiment, a portion of the apertures, in particular shaped as perforations, has a length greater than the width and either the length or the width extends in the main direction of fluid flow. In particular the width of the first apertures extends in the main direction of fluid flow or the length of the second apertures extends in the main direction of fluid flow. The gas distribution structure arranged on the first layer and the and at least one the first apertures and second apertures are in fluid contact.

A supporting layer forming a third layer can be provided for an even distribution of either one of the first or second reactant fluids onto an electrode. According to an embodiment a plurality of inlet openings for the respective reactant fluid are provided on at least one of the first and second layers. By providing a plurality of inlet openings, a more even distribution of fluid flow can be obtained. A further advantage is the more even distribution of heat, thus allowing making use of the entire reactive surface provided by the CAE unit.

Furthermore gas distribution structures forming the pattern for fluid flow in particular at least some of the first or second apertures can be manufactured by punching or embossing. According to an alternative embodiment, the supporting layer forms a monolithic piece with the first layer. According to an embodiment, the first layer comprises a first sheet containing perforations and a second sheet forming the base layer. The supporting layer can be arranged on the opposite side of the base element of the first layer.

Furthermore, the invention concerns fuel cell or an electrolyzing device comprising a gas distribution element according any one of the preceding embodiments.

A method for operating a gas distribution element for a fuel cell or an electrolyzing device comprises the following steps: a first reactant fluid flows along a first side of the gas distribution element, a second reactant fluid flows along a second side of the gas distribution element and the first or second reactant fluid provide reactants, charge-carrying ions and electrons to a cathode-anode-electrolyte unit on either side thereof, such that the charge-carrying ions can cross the electrolyte to perform an electrochemical reaction. The gas distribution element comprises a first layer and a second layer, said first and second layers are disposed with a gas distribution structure forming a pattern for a fluid flow, wherein the second layer is a homogenizing element, which has first apertures or second apertures which have a length and a width, with the length being greater than the width and the length of at least some of the first apertures extending in a transverse direction to the main direction of fluid flow and the flow through the homogenizing element is evenly distributed over the surface of the second layer. Thus, the reactive surface corresponds largely with the surface of the gas distribution element and electrochemical reactions are carried out uniformly over the entire surface of the homogenizing element.

Primary applications for SOFCs are in the fields of remote power, distributed power generation, Combined Heat and Power (CHP), Auxiliary Power Units (APUs) for trucks, buses, and ships, portable power and efficient biogas conversion.

### Brief description of the drawings

These and other features and advantages of the invention will be more fully understood and appreciated from the following description of certain exemplary embodiments of the invention taken together with the accompanying drawings, in which like numerals represent like compounds. In particular it is shown in
Fig. 1 a schematic diagram of a SOFC system,
Fig. 2 an isometric view on a gas distribution element according to a first embodiment of the invention,
Fig. 3 a cross-sectional view of a unit cell according to a second embodiment of the invention,
Fig. 4 an explosion view of a unit cell of a third embodiment of the invention,
Fig. 5 a partial top view of two neighboring layers of a gas distribution element,
Fig. 6A partial top view of a perforated layer of a gas distribution layer,
Fig. 6B a section along line A-A of Fig. 6A,
Fig. 6C a section along line B-B of Fig. 6A,
Fig. 7A a schematic view showing ideal conditions of flow through a gas distribution layer of a stack,
Fig. 7B a schematic view showing optimal real conditions of flow through a stack,
Fig. 7C a schematic view showing conditions of flow through a stack according to the prior art,
Fig. 7D a view on a stack with a flow according to conditions shown in Fig. 7B,
Fig. 7E a view on a stack with a flow according to conditions shown in Fig. 7C,
Fig. 8 a section through a plurality of consecutive layers of a stack,
Fig. 9 a first embodiment of a gas flow dividing element,
Fig. 10 a second embodiment of a gas flow dividing element,
Fig. 11 a third embodiment of a gas flow dividing element
Fig. 12 a fourth embodiment of a gas flow dividing element
Fig. 13 a fifth embodiment of a gas flow dividing element
Fig. 14 a sixth embodiment of a gas flow dividing element
Fig. 15 shows a seventh embodiment of a gas flow dividing element
Fig. 16 shows a eighth embodiment of a gas flow dividing element

### Description of the preferred embodiments

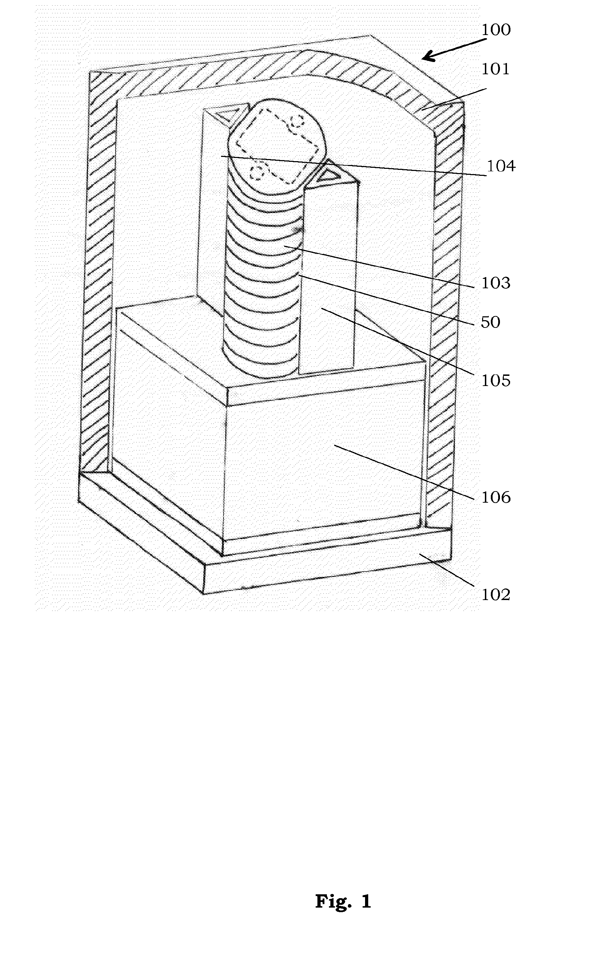

Fig. 1 shows a solid oxide fuel cell system 100 according to the invention. The solid oxide fuel cell system comprises a casing 101, which contains a fuel cell stack 103 being composed of a plurality of unit cells 50. The casing rests on a basement 102. The fuel cell system or balance of plant includes a heat exchanger 106 for heating the reactants as well as reactant preparation units for providing the reactants in the correct composition and the correct flow rate to the fuel cell, which are not shown in the drawings. The stacks are disposed with reactant supply 104 and reactant discharge elements 105.

The stack can be configured as shown in US 7632586 B2, where a particular electrode contacting and gas distribution structure is applied. In prior art, a stack based on this technology has been developed for remote and micro-Combined Heat and Power (CHP) applications of about 1 kW. It is characterized by low pressure drops and can achieve power densities of 1 kW/1 or 400 mW/cm² with electrical efficiencies of above 45%. The stacks can be fuelled with reformed natural gas, reformate gas or hydrogen. This stack manifolds the air externally and the fuel internally and recovers the fuel exhaust stream. The exhaust stream can be used in post combustion or recycled for reforming (given adapted balance of plant). The use of US 7632586 B2 improves the thermal cycling tolerance of the stack, avoiding additional performance degradation due to thermal cycling..

With two recent prototypes combining the present invention with the technology disclosed US 7632586 B2, an improved performance was measured. A maximum fuel conversion of 94% was attained with efficiencies reaching 61 % using hydrogen as fuel and 69% using methane. Moreover, up to 50 thermal cycles were attained without significant damage on a short stack of that combined type. This is far above earlier results based on the sole handling of reactant flow as disclosed in US 7 632 586 B2.

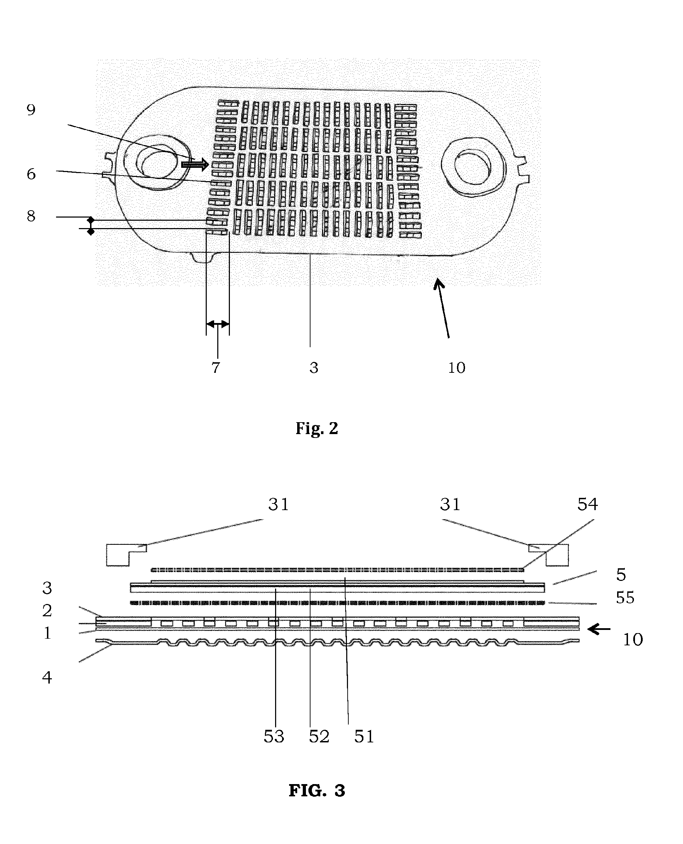

For the distribution of reactants a gas distribution element 10 is foreseen which is depicted in detail in Fig. 2. The gas distribution element is arranged between two neighboring cathode-anode electrolyte units 5. Under a unit cell 50, a unit being composed of an cathode-anode-electrolyte unit and the gas distribution element 10 is to be understood.

The gas distribution element is used for providing the reactant containing oxygen and a fuel to the respective electrode.

For the operation as a fuel cell, the reactant containing oxygen is supplied to the positive oxygen electrode acting as a cathode.

For an operation of the unit cell as an electrolyzing device, the reactant containing oxygen is supplied to the positive oxygen electrode acting as an anode. In most cases this reactant is air; however pure oxygen or an oxygen containing gas may be supplied with the same gas distribution element.

The gas distribution element is used for providing the reactant containing O₂ to the positive oxygen electrode of the CAE unit and a second reactant to its negative electrode.

In most cases the O₂-containing reactant is air, however pure oxygen or an oxygen containing gas may be supplied with the same gas distribution element. The second reactant contains any mixture of H₂, CO, H₂O, CO₂, methane, ammonia, other hydrocarbons or optional diluents.

For the operation as a fuel cell, the reactant containing oxygen is supplied to the positive oxygen electrode which operates as cathode. For an operation of the unit cell as an electrolyzing device, the reactant containing oxygen is supplied to the same positive oxygen electrode which then acts as an anode. However, any supply of air on the oxygen electrode is not necessarily required in this case.

In a preferred embodiment, the second reactant (fuel) is distributed inside the gas distribution element 10. The negative electrode of the CAE unit is thus facing the second layer 3 of the gas distribution element 10.

The gas distribution element can also be foreseen for PEFC, AFC or MCFC fuel cell, thus its application is in no way limited to SOFC. The gas distribution element can also be used for an electrolyzing device operating in the inverse way to any of the fuel cell types as mentioned above.

The gas distribution element 10 combines three essential functions of the stack: it accomplishes current collection from the electrodes to the metallic interconnects; it manifolds the reactant, in particular the fuel or oxygen containing gas between and on the cells; and it seals the reactant passages from each other and against the environment.

The gas distribution element thus integrates the gas distribution on the cell, allowing the use of thin, not machined metallic sheets instead of expensive, structured bi-polar plates. In assembly, the green ceramic-to-ceramic contact avoids rigid metal-to-ceramic interfaces, a potential source of cell breakage due to thermal strains.

The proposed stack includes according to a preferred application between 1 and 100 cells, corresponding to 16-5000W nominal electrical power.

The embodiment shown in Fig. 3 shows the arrangement of a unit cell 50 comprising a cathode-anode-electrolyte unit 5 and a gas distribution element 10 according to a second embodiment of the invention in a partial section.

The gas distribution element 10 according to the second embodiment shown in Fig. 3 is composed of a base layer 1, a second layer 3 and a first layer 2. The first layer 2 also contains apertures. The gas distribution element 10 can also comprise a supporting layer 4, which is shaped as a corrugated sheet.

The cathode-anode-electrolyte unit 5 is composed of a first electrode 51, a second electrode 53 and an electrolyte 52 sandwiched between the first and second electrodes. The unit cell 50 further comprises a pair of lateral seals 31, which provide a gas tight seal for the cathode-anode electrolyte unit 5 and the reactant fluid supply structure, in particular a supporting layer 4 for supplying the first reactant fluid 54 to the first electrode 51. The second reactant fluid 55 is supplied to the second electrode 53 above the first layer 2.

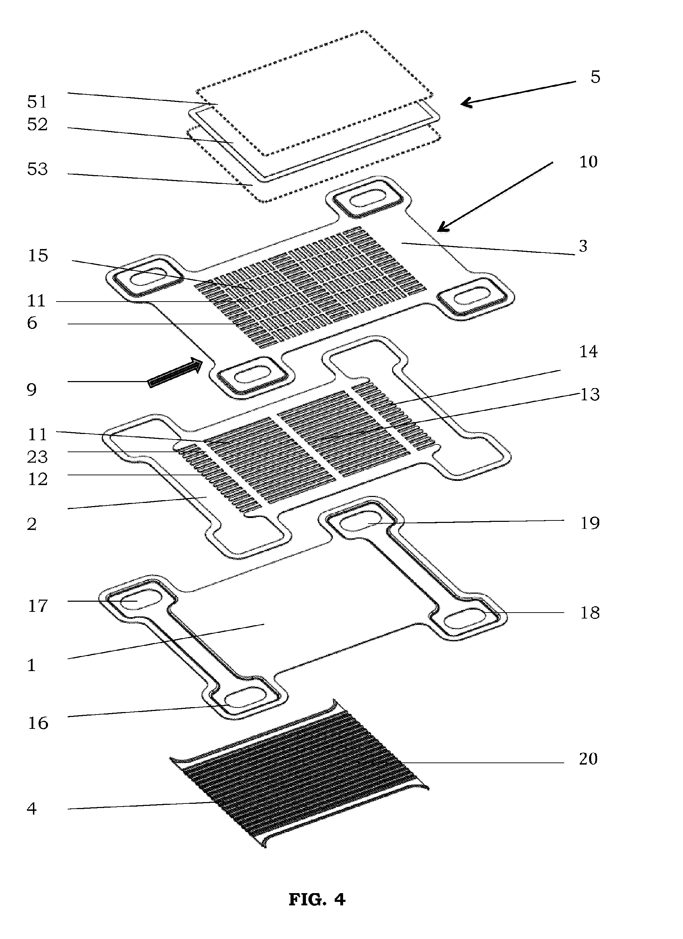

Fig. 4 shows an explosion view of a gas distribution element 10 and a cathode-anode-electrolyte unit 5 according to a third embodiment of the invention. The cathode-anode-electrolyte unit 5 is composed of a first electrode 51, a second electrode 53 and an electrolyte 52 sandwiched between the first and second electrodes.

The gas distribution element 10 for a fuel cell or an electrolyzing device comprises a first layer 2 and a second layer 3; said first 2 and second layers 3 are disposed with a gas distribution structure 11 forming a pattern for a fluid flow. The second layer 3 is a homogenizing element. The second layer 3 has first apertures 15 which are configured as rectangular openings having a length 28 and a width 29. The length is greater than the width. The length 28 extends transversely to the main direction of fluid flow 9; the width 29 extends in the main direction of fluid flow. The second layer 3 further has second apertures 6 which have a length 7 and a width 8, with the length 7 being greater than the width 8 and the width 8 extending in a transverse direction to the main direction of fluid flow 9.

The first layer 2 or channel layer has a plurality of inlet channels 12, a plurality of consecutive channels 13 and a plurality of outlet channels 14.

These second apertures 6 can form channel-like structures, which are arranged in particular rectangular or inclined to the inlet channels 12 arranged in the first layer. This has the advantage, that the fluid flowing inside the channels of the first layer 2 may be directed by a bar element 23 arranged on the first layer 2 towards the aperture 6. The aperture 6 thus forms a fluid passage traversing the bar element 23. Whenever the fluid flows over the bar element 23 it enters the aperture 6 above the bar element 23 and is distributed into a consecutive channel 13 continuing behind such a gas distribution structure 11 and the neighboring channels due to the fact that also the first apertures 15 are foreseen which have a length and a width and their length being larger than their width and their length extending in a transverse direction to the main direction of fluid flow.

Advantageously each inlet channel 12 is continued with a consecutive channel 13 and an outlet channel 14. These channels may have the same cross-section and may be arranged one behind each other seen in the main direction of fluid flow. Advantageously a plurality of inlet channels 12, consecutive channels 13 and outlet channels 14 are foreseen. Each of the inlet channels may be arranged parallel to the corresponding neighboring inlet channel, the same may apply also to the consecutive channels or outlet channels.

The first layer 2 and the second layer 3 may be formed on separate sheets as shown in Fig. 4; however, they may also be combined into a single sheet.

Furthermore the first layer 2 may be composed of a perforated sheet containing the channels 12, 13, 14 and a base layer 1 providing the base for the channels. This solution can be advantageous for the manufacture of the channels as it is possible to perforate the channels into a imperforated sheet such as to form the perforated sheet. Furthermore a considerable variety of shapes is available for the perforations. The perforations may be conveniently punched out of the sheet, laser cut or also etched or formed as lost inserts, which are removed after casting or molding the layer. Thus foreseeing the base layer 1 and the second layer 3 as separate sheets may simplify the manufacturing of the layers or the application of a greater variety of manufacturing methods to manufacture the layers.

Furthermore two inlet openings 16, 17 are provided for the reactant fluid to enter the gas distribution element. In addition two outlet openings 18, 19 may be provided for the fluid reaction product to leave the gas distribution element 10.

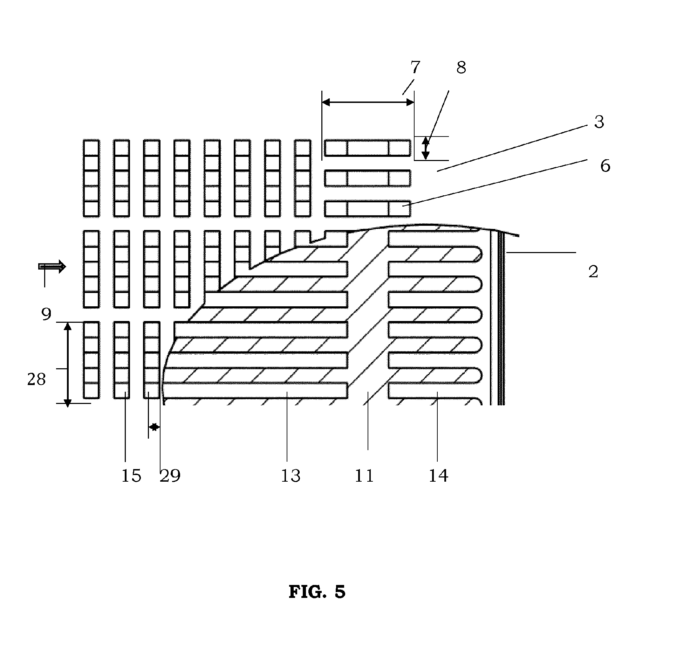

Fig. 5 shows a partial top view of the first and second layers 2, 3 of a gas distribution element of the third embodiment in a view as a partial cut from the top side of the gas distribution element. The portion of the first layer shows some of the consecutive channels 13 and some of the outlet channels 14. The first layer 2 is arranged behind the second layer 3. The second layer 3 contains first apertures 15 having length 28 and a width 29 with the length 28 extending transverse to the main direction of fluid flow 9.

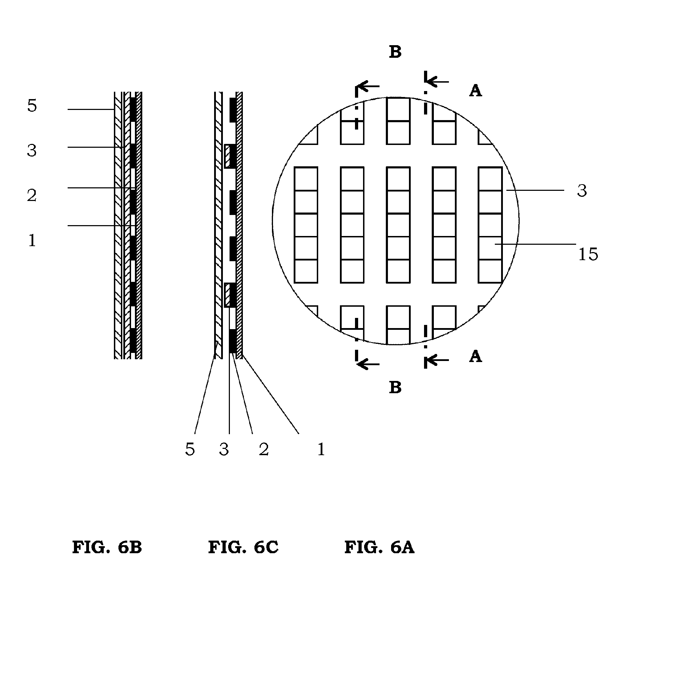

Fig. 6A shows a partial top view of a perforated second layer 3 of a gas distribution layer 10 according to any of the first second or third embodiments of the invention. Fig. 6B shows a section along line A-A of Fig. 6A showing the cathode-anode electrolyte unit 5, the first layer 2, the second layer 3 and the base layer 1. The base layer 1 and the first layer 2 are manufactured from distinct sheets. Fig. 6C shows a section along line B-B of Fig. 6A. As a difference to Fig. 6B the section traverses a row of apertures 15, therefore the second layer is interrupted by the apertures. Furthermore the consecutive channels 13 in the first layer 2 are shown.

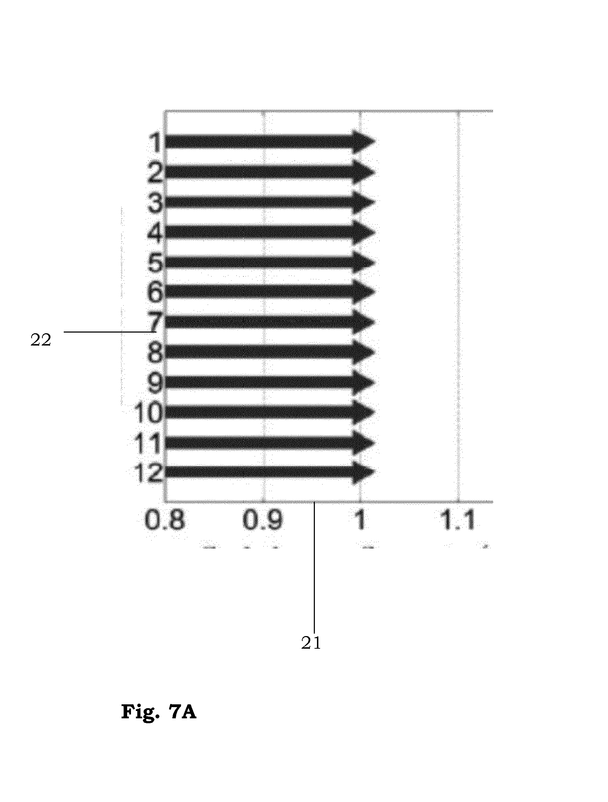

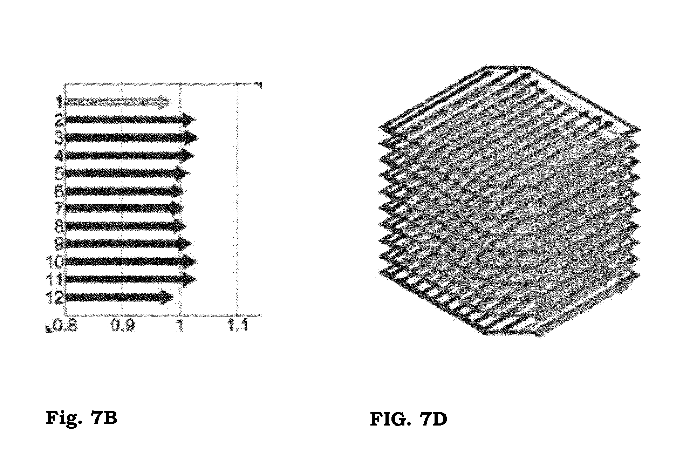

Fig. 7A is a schematic view showing ideal conditions of flow through a gas distribution layer of a stack, whereby the arrows indicate the flow velocity. The x-axis of the coordinate system shows the flow velocity in the main direction of flow 9. The y-axis shows the channel number. The channel number corresponds to a channel as shown in the stack of Fig. 7D. Fig. 7B is a schematic view showing optimal real conditions of flow through a stack, thus the flow velocity close to the casing of the stack having the lowest value. Fig. 7D is a view on a stack with a flow according to conditions shown in Fig. 7B.

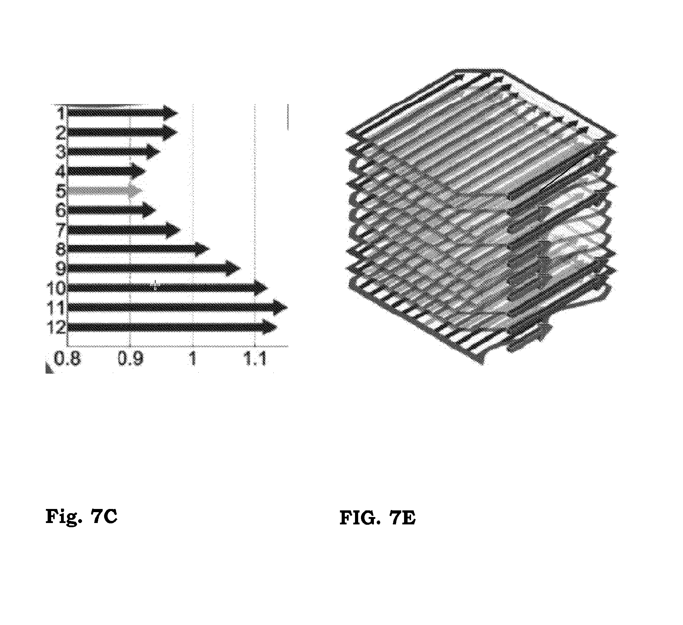

Fig. 7C is a schematic view showing real conditions of flow through a stack according to the prior art, thus a very inhomogeneous distribution of flow velocity. In particular Fig. 7c shows a minimum of flow speed in channel number 5. This minimum may lead to local fuel starvation, overheating of the fuel cell stack and consequently to performance limitations, or even cracks in the electrode, anode or cathode materials, thus a premature damage of the stack or at least the parts thereof which are subjected to local overheating. Fig. 7E is a view on a stack with a flow according to conditions shown in Fig. 7C. Moreover, Fig. 7e shows that the flow conditions in neighboring gas distribution elements according to the prior art may vary significantly.

Recent modeling and experimental work on solid oxide fuel cells has shown how important the homogeneity of the fuel distribution and the arrangement of flows are for the performance and reliability of fuel cells. Fig. 7A represents such an ideal case for air and fuel flowing in the same or in the opposite direction. Due to fabrication processes, some compromises are often required, which result in gas distributions that slightly differ from the ideal case as shown in Fig. 7B. The most recent research includes the study of the effect of fabrication tolerances or non-ideal component properties on performance and reliability, thus allowing assessing the suitability of industrial processes or specific designs for the desired performance and reliability.

The work made by Cornu and Wuillemin (Impact of random geometric distortions on the performance and reliability of an SOFC (2011) Fuel Cells, 11 (4), pp. 553-564) shows in particular how the quality of fuel distribution depends on the tolerances of the depth of the channels in the gas distribution structures. The depth of the channels ranges usually from 0.2 mm to the 1-2 mm scale, and their width vary more often from 1 to 2 mm. Depths in the range of 0.5 mm are often found. In such cases, depth variations of 0.05 mm around the targeted value already have a very important impact on flow distribution. An example of such deviation is given in Fig. 7C. Even if depth variations of 0.05 can be achieved by appropriate fabrication techniques, the space between cathode-anode-electrolyte unit and gas distribution element can also vary depending on the contact layers used in between. The cumulated depth variations for the effective channel sections are therefore very difficult to maintain in the above-mentioned range of deviations. Last, but not least, the contacting layers or channels may creep with time, which will in any case lead to a poor fuel distribution with time.

As unit cells are stacked on top of each other, the defects of the individual elements will cumulate, leading to an even increased deviation of flows in operation which is shown by the case of Fig. 7E.

As exactly the same amount of fuel is converted in all unit cells of the stack, thus a common current flow is obtained, the areas of the unit cells presenting a low fuel flow are exposed to the risk of fuel starvation when the fuel conversion is increased. As a large conversion is required to reach high performance, a poor fuel distribution will lead to performance limitations or to the damaging of one cell due to fuel starvation.

As there is hardly any sign for the operator that part of the stack is suffering from starvation unless it is already too late, this kind of problem is of large importance from an industrial and operative point of view.

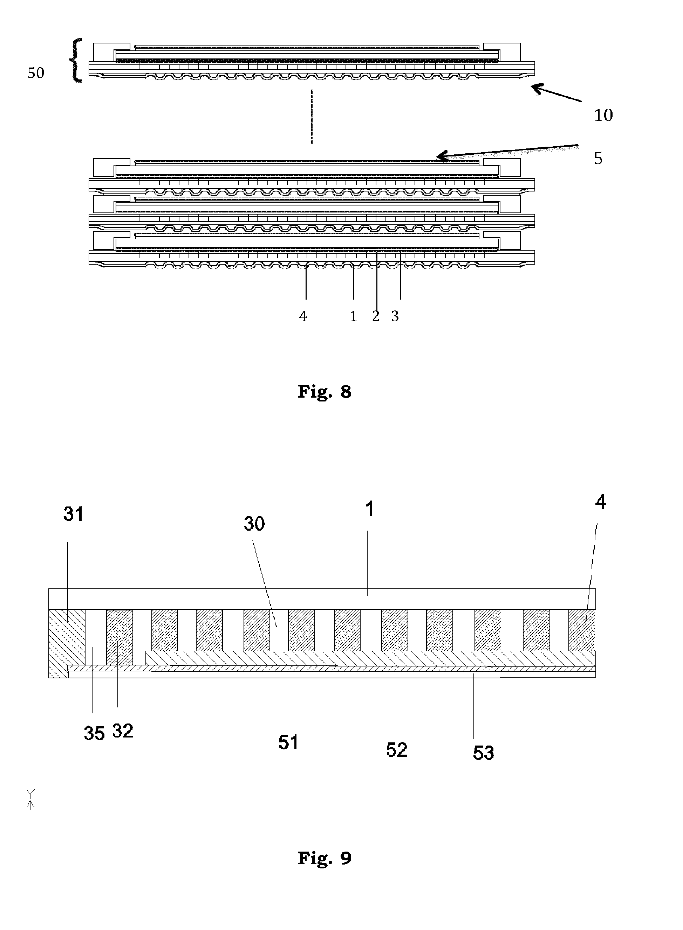

Fig. 8 is a section though a plurality of consecutive layers of a stack comprising a gas distribution element in accordance with the embodiment as shown in Fig. 4. Thus, the cross-section of the fuel channels is given and fixed by the geometry of the channel structure of the first layer 2 and the second layer 3 being a perforated plate.

Any optional additional contacting layer used between the latter and the cathode-anode electrolyte unit 5 will have no influence on the flow. Moreover, the geometry of holes on the perforated plate allows the mixing of several channels at regular intervals along the fuel path, hence creating near-isobars among channels at those locations. Thanks to this, any deviation of geometry in any channel along the flow is corrected by mixing with adjacent channels, hence using the averaging effect to homogenize the respective reactant fluid flow.

The structure was implemented in two stack designs according to US 7 632 586 B2 and validated in operation. A maximum fuel conversion of 94% was attained with efficiencies reaching 61 % using hydrogen as fuel and 69% using methane. This is far above earlier results based on the handling of reactant flow as disclosed in US 7 632 586 B2.

Fig. 9 shows a first embodiment of a gas flow dividing element being composed of a base layer 1, which may be part of a bipolar plate or a gas distribution element 10 according any one of the previously described embodiments and a supporting layer 4, which rests on a cathode-anode electrolyte unit 5. According to Fig. 9 the base layer 1 is arranged on top of the cathode-anode-electrolyte unit 5 and the supporting layer 4 is arranged between the cathode-anode electrolyte unit 5 and the base layer 1. The order or succession of elements may be reversed, furthermore the arrangement does not need to be horizontal as shown in Fig. 9, it could be also vertical or arranged in an angle to a horizontal plane. Furthermore each of the base layer 1, the supporting layer 4 and the cathode-anode-electrolyte unit 5 may be part of a planar stack or may be curved, such as to form a tubular stack. The base layer 1 provides a gas-tight seal to the gas distribution element 10.

Thus the gas flow dividing element for a fuel cell or an electrolyzing device comprises a supporting layer 4, which has been shown in an embodiment in Fig. 4, which is disposed with a pattern for a fluid flow. The pattern of fluid flow is here shown as a plurality of channels of rectangular cross-section. These channels are an embodiment of a reactant fluid passage 30. In Fig. 9 the supporting layer 4 contains a plurality of such reactant fluid passages 30.

A cathode-anode-electrolyte unit 5 is composed of a first electrode 51 and a second electrode 53 and an electrolyte 52 sandwiched between the first and second electrodes. The reactant fluid passage 30, which is formed by the pattern for fluid flow, is open towards the first electrode 51. Thus the reactant fluid can directly contact the surface of the first electrode 51. A lateral sealing element 31 is provided at the periphery of the supporting layer 4. A gas distribution structure formed as a bypass fluid passage 35 is formed between the lateral sealing element 31 and a separating wall element 32 is provided for a bypass reactant fluid flow. The lateral sealing element ensures that the reactant fluid, in particular air or another gas containing oxygen passes only through the reactant fluid passages 30 and the bypass fluid passages 35. It is to be noted that Fig. 9 to 16 only show a portion of a gas flow dividing element, the remainder thereof being a mirror symmetrical copy of the portion shown in the Fig. 9 to 16.

If the device is to be operated as a fuel cell the first electrode 51 is a cathode and the second electrode is an anode 53 and an air flow is directed to the cathode 51. The gas flow dividing element can form a unit element of fuel cell.

By means of the gas distribution structures 33, 35, 36, 37 and the separating element 32 electrode pollution can be reduced as only the gas flow required to perform the electrochemical reaction is directed to the electrode. Any superfluous gas flow is bypassed by the separating element and can perform a cooling function, thus the bypassed fluid can be used as a cooling fluid. This is achieved using polluted gas bypass channels for contaminated parts of the gas stream. A split of the gas stream directed to the electrode into a first portion reactant fluid and a second portion of reactant fluid forming a bypass fluid is realized, such as to limit the rate of deposition of pollutants onto the electrode. The bypass fluid passage is bounded by the separating wall element 32, the sealing element 31 and the electrolyte 52.

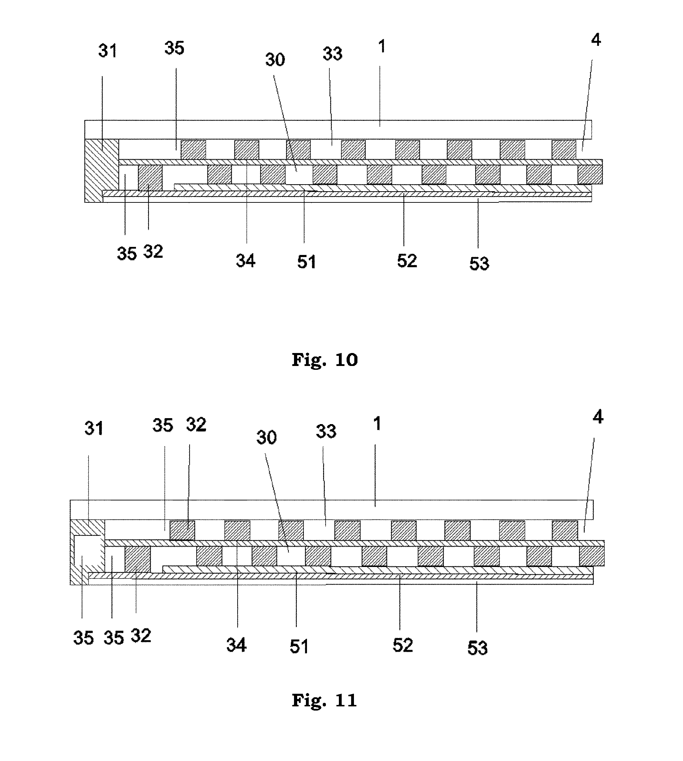

Fig. 10 shows a second embodiment of a gas flow dividing element in which a supporting layer 4 is foreseen, which comprises a plurality of gas distribution passages 33 and a plurality of reactant fluid passages 30 which are separated by a separating element 34. The supporting layer 4 is sandwiched between a base layer 1 and a cathode-anode-electrolyte unit 5, which is composed of the first electrode 51, the second electrode 53 and an electrolyte 52.

The left hand corner of Fig. 10 shows a lateral end of the gas flow dividing element. A lateral seal 31 is provided for providing a gas tight seal, so that the reactant fluid may not be released into the environment. Furthermore a separating element 32 is provided for providing a bypass fluid passage 35 for dividing the reactant fluid into a first portion of reactant fluid contacting the first electrode 51 and a second portion of reactant fluid not contacting the first electrode 51. Thereby a surplus of reactant fluid is bypassed. Thereby an unnecessary contamination of the electrode can be avoided.

A third portion of the reactant fluid flows through the gas distribution passages 33. Thereby the third portion of reactant fluid can be used as a cooling fluid. Thus any heat which is generated by the electrochemical reaction can be conducted away from the cathode-anode-electrolyte unit 5 so as to provide stable reaction conditions.

An additional bypass passage may be foreseen on the side of the supporting layer 4 facing the base layer 1. The additional bypass passage 35 is delimited by the inner surface of the seal 31, the base layer, the outermost separating wall element 32 of the supporting layer 4 and the separating element 34 forming a splitting element.

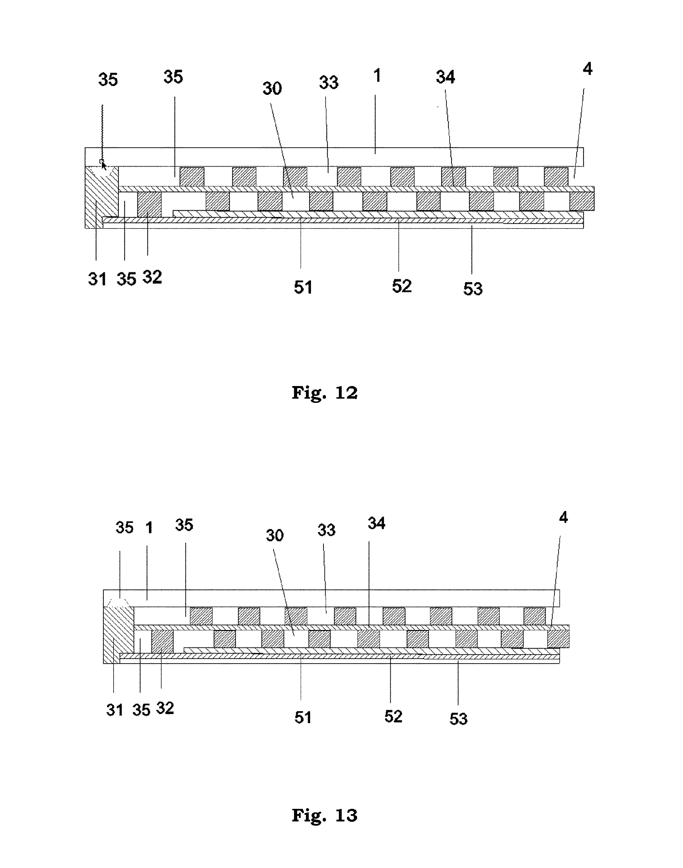

Fig. 11 shows a third embodiment of an air flow dividing element and Fig. 12 shows a fourth embodiment of an air flow dividing element. The embodiments of Fig. 11 and Fig. 12 have the same configuration as shown in Fig. 10 and therefore reference is made to Fig. 10. According to the third and fourth embodiment, the sealing element 31 contains a bypass fluid passage 35. The bypass fluid passage 35 may be integrated completely into the sealing element as shown in Fig. 10 Alternatively the bypass fluid passage 35 may be delimited by a base layer 1 on the upper side and be formed as a groove in the sealing element 31 as shown in Fig. 12. The bypass fluid passage may be etched, punched or embossed in the sealing element 31.

Fig. 13 shows a fifth embodiment of a gas flow dividing element. Again, the configuration of the gas flow dividing element shows the same elements as Fig. 10-12. However, according to Fig. 13, the base layer 1 contains a bypass fluid passage 35. This bypass fluid passage 35 is formed as a groove in the base layer. The bypass fluid passage 35 may be etched or embossed in the base layer. On its lower end, this bypass fluid passage is delimited by the sealing element 31.

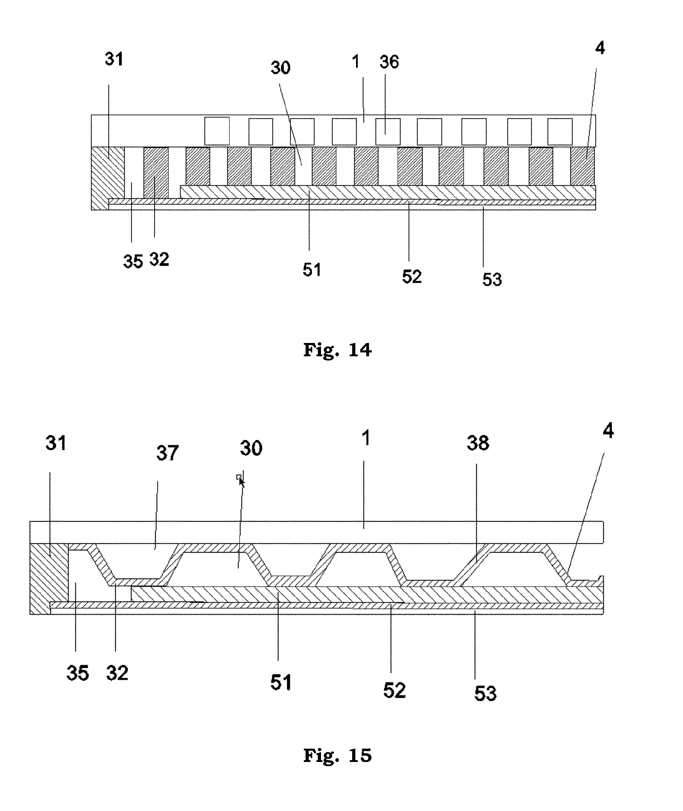

Fig. 14 shows a sixth embodiment of a gas flow dividing element. According to the embodiment shown in Fig. 14, a plurality of gas distribution structures 36 are foreseen in the base layer 1. These gas distribution structures may be configured as a plurality of split fluid passages, in particular gas flow channels 36. The passages may be shaped as tubes of circular or rectangular cross-section. Alternatively, the base layer may contain grooves. A separating element similar to the separating element 34 of the embodiment according to Fig. 11, 12 or 13 may be foreseen, which is however not shown in the drawings.

Fig. 15 shows a seventh embodiment of a gas flow dividing element. The supporting layer 4 is according to this embodiment is shaped as a sheet having corrugations, thus a corrugated sheet. These corrugations form a structure being composed of a series of peaks and troughs. The open space above a trough and the open space below a peak forms a reactant fluid passage 30 when in contact with the electrode and a cooling fluid passage 36 when in contact with the base layer 1. The corrugated sheet thus forms the separating element 38. The separating element 38 comprises a gas distribution structure 37 which has a first surface 39 facing the cathode-anode-electrolyte unit 5 so to form the reactant fluid passage 30 and a second surface 40 facing the base layer 1. Thereby a split fluid passage is formed.

The split fluid passage is used for circulating a cooling fluid, in particular cooling air. The outermost passage is a bypass passage. The bypass passage is bordered by the cathode-anode-electrolyte unit 5, a sealing element 31 and a separating element 32, which is formed by a portion of a corrugation trough of the separating element 38. According to this embodiment, the separating element 32 and the separating element 38 are formed of a single piece.

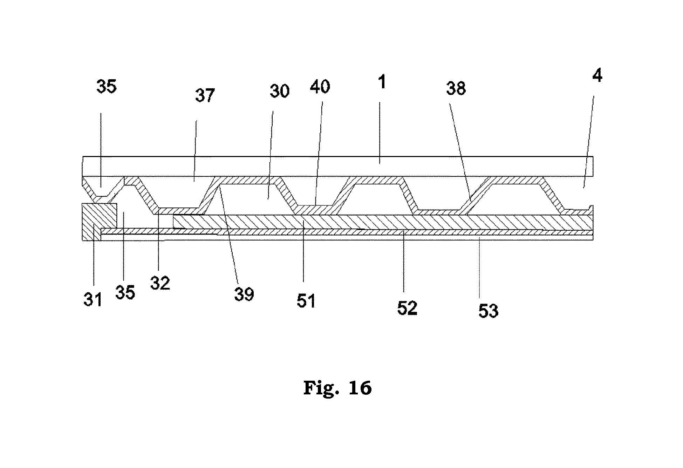

Fig. 16 shows an eighth embodiment of a gas flow dividing element which differs from the embodiment as shown in Fig. 15 such the separating element portion 32 of the separating element 38 provides a support for the sealing element 31. An additional bypass passage 35 is formed by the trough forming the separating element portion 32. The size of the passages forming the reactant fluid passages 30 or the split fluid passages 37 or the bypass fluid passages 35 may vary, thus the shape of the corrugations may vary as well as the cross-section of the individual passages formed by any one of the troughs or peaks.

A gas flow dividing element according to any of the preceding embodiments may comprise a gas distribution element 10 comprising a first layer 2 and a second layer 3. The first layer 2 and second layer 3 are disposed with a pattern for a fluid flow, and the second layer 3 is a homogenizing element, which has apertures 6 which have a length 7 and a width 8. The length 7 is greater than the width 8 and the width 8 extends in a transverse direction to the main direction of fluid flow 9 as shown in Fig. 2 to 8. The base layer 1 separates the gas distribution element 10 from the supporting layer 4. A fuel cell or an electrolyzing device comprises a gas flow dividing element according any one of the preceding embodiments.

## Claims

1. A gas flow dividing element for a fuel cell or an electrolyzing device comprising a supporting layer (4) which is disposed with a pattern for a fluid flow and a cathode-anode-electrolyte unit (5) whereby the cathode-anode-electrolyte unit (5) is composed of a first electrode (51), a second electrode (53) and an electrolyte (52) sandwiched between the first electrode (51) and the second electrode (53), and the supporting layer (4) is arranged in a contacting relationship with the first electrode (51), whereby a reactant fluid passage (30) is formed by the pattern for fluid flow for contacting the reactant fluid with the first electrode (51), **characterized in that** the supporting layer (4) comprises a separating element (1, 32, 34, 38) to form a gas distribution structure (33, 35, 36, 37) for dividing the reactant fluid into a first portion of reactant fluid contacting the first electrode (51) and a second portion of reactant fluid not contacting the first electrode (51).

2. A gas flow dividing element according to claim 1, wherein the separating element (1, 32, 34, 38) is a separating wall element (32) such that the gas distribution structure (35) is configured as a bypass fluid passage or a splitting element (34, 38) such that the gas distribution structure (33, 36, 37) is configured as a split fluid passage.

3. A gas flow dividing element according to any of the preceding claims, wherein the separating element (1, 32, 34, 38) is configured as one of a splitting element (34, 38) with attached gas distribution structures (33, 37) for distribution of a cooling fluid or a base layer (1) with integrated or attached gas distribution structures (36) for distribution of a cooling fluid.

4. A gas flow dividing element according to any of the preceding claims, whereby the separating element (1, 32, 34, 38) is at least one of an at least piecewise continuous sheet element or a sheet element containing openings for partial mixing of flows.

5. A gas flow dividing element according to any one of the preceding claims, wherein a sealing element (31) is provided for sealing the pattern for fluid flow of the supporting layer (4) from the environment.

6. A gas flow dividing element according to claim 5, wherein the gas distribution structure forming a dividing fluid passage (35) is arranged within the sealing element (31) or adjacent to the sealing element (31) or between the sealing element (31) and the separating element (32, 34, 38) for the second portion of reactant fluid.

7. A gas flow dividing element according to claim 6, whereby the sealing element (31) is a lateral sealing element arranged at the periphery of the supporting layer (4).

8. A gas flow dividing element according to any of the claims 3 to 7, wherein the base layer (1) is provided on the side of the supporting layer (4) opposing the cathode-anode-electrolyte unit (5).

9. A gas flow dividing element according to claim 8, wherein the base layer (1) contains a gas distribution structure (36) forming a cooling fluid passage.

10. A gas flow dividing element according to any of the preceding claims, wherein the separating element (32, 38) is formed as a corrugated sheet.

11. A gas flow dividing element according to claim 10, wherein the corrugated sheet provides a support for the sealing element (31).

12. A gas flow dividing element according to claim 10 or 11, wherein the separating element (38) comprises a gas distribution structure (37) which has a first surface (39) facing the cathode-anode-electrolyte unit (5) so to form the reactant fluid passage (30) and a second surface (40) facing the base layer (1) so to form a split fluid passage.

13. A fuel cell or an electrolyzing device according to any of the preceding claims, comprising a gas flow dividing element according to any of the preceding claims and a gas distribution element (10) comprising a first layer (2) and a second layer (3), said first (2) and second layers (3) are disposed with a gas distribution structure (11) forming a pattern for a fluid flow, and the second layer (3) is a homogenizing element, which has first apertures (15) or second apertures (6), wherein at least some of the first apertures (15) have a length (28) and a width (29), with the length (28) being greater than the width (29) and the length (28) extending in a transverse direction to the main direction of fluid flow (9).

14. A fuel cell or an electrolyzing device according to claim 12, wherein the base layer (1) separates the gas distribution element (10) from the supporting layer (4).

15. A method for operating a gas flow dividing element for a fuel cell or an electrolyzing device, wherein a first reactant fluid flows along a first side of a cathode-anode-electrolyte unit (5), a second reactant fluid flows along a second side of the cathode-anode-electrolyte unit (5) and the first or second reactant fluids provide reactants, charge-carrying ions and electrons to a cathode-anode-electrolyte unit (5) on either side thereof such that the charge-carrying ions can cross the electrolyte to perform an electrochemical reaction,, whereby only one of the first or second reactant fluids flows through a supporting layer (4) which is disposed with a pattern for a fluid flow, and a reactant fluid passage (30) is formed by the pattern for fluid flow such that the one of the first or second reactant fluids contacts the first electrode (51), **characterized in that** the supporting layer (4) comprises a separating element (1, 32, 34, 38) to form a dividing fluid passage (33, 35, 36, 37) whereby the only one of the first or second reactant fluids is divided into a first portion of reactant fluid contacting the first electrode (51) and a second portion of reactant fluid not contacting the first electrode (51).
